# EUROPÄISCHE PATENTSCHRIFT

(11) **EP 3 480 724 B1**
(45) Veröffentlichungstag und Bekanntmachung des Hinweises auf die Patenterteilung: **02.06.2021**
(21) Anmeldenummer: 18203307.6
(22) Anmeldetag: 30.10.2018
(51) Int. Cl.: G06F 21/62, H04L 29/06

(54) **COMPUTERIMPLEMENTIERTES VERFAHREN ZUM ERSETZEN EINES DATENSTRINGS DURCH EINEN PLATZHALTER**
COMPUTER IMPLEMENTED METHOD FOR REPLACING A DATA STRING WITH A PLACEHOLDER
PROCÉDÉ MIS EN OEUVRE PAR ORDINATEUR DESTINÉ AU REMPLACEMENT D'UNE CHAÎNE DE DONNÉES PAR UN CARACTÈRE DE REMPLACEMENT

(30) Priorität: 07.11.2017 DE 102017125930
(43) Veröffentlichungstag der Anmeldung: 08.05.2019
(73) Patentinhaber: Comforte AG, 65189 Wiesbaden (DE)
(72) Erfinder: HORST, Henning, 86874 Zaisertshofen (DE); HORST, Michael, 16816 Wuthenow (DE)
(74) Vertreter: WSL Patentanwälte Partnerschaft mbB

(56) Entgegenhaltungen:
- EP-A2- 2 363 839
- US-A1- 2008 263 645
- US-A1- 2009 037 553
- US-A1- 2010 293 143
- US-A1- 2011 154 466
- US-A1- 2012 023 066
- US-A1- 2012 066 769
- US-A1- 2013 198 851

## Beschreibung

Die vorliegende Erfindung betrifft ein computerimplementiertes Verfahren zum Ersetzen eines Datenstrings durch einen Platzhalter in einer Ersetzungseinrichtung und ggf. zum Wiederherstellen des Datenstrings aus dem Platzhalter in der Ersetzungseinrichtung.

Als typische Architektur für den bargeldlosen Zahlungsverkehr haben sich Systeme etabliert, bei denen ein Zahlungsverkehrsabwickler über ein Netzwerk, insbesondere über das Internet, eine Vielzahl von Verkaufsstellen sowie Geldautomaten auf der einen Seite und eine Vielzahl von Kartenanbietern sowie eine Vielzahl von Zahlungsausgleichssystemen auf der anderen Seite mit einem zentralen Server verbindet, welcher die einzelnen Transaktionen verwaltet und steuert.

Als Herausforderung erweist sich dabei, dass Datensätze, welche vertrauenswürdige Datenstrings, wie beispielsweise Karten- oder Kontonummern, in der folgenden Anmeldung auch als PANs (englisch: Primary Account Numbers) abgekürzt, enthalten, nicht nur übertragen, sondern auch verarbeitet und gespeichert werden müssen. Insbesondere müssen die gespeicherten und auf dem Server in der Verarbeitung befindlichen PANs vor dem Zugriff und dem Einblick Dritter geschützt werden, um einen Missbrauch des Zahlungssystems zu verhindern.

Zur geschützten Verarbeitung und Speicherung von Datensätzen, welche PANs enthalten, wurden Verfahren zum Ersetzen der im Klartext empfangenen PANs durch den PANs eindeutig zugeordnete Platzhalter, beispielweise zufällige Token, entwickelt. Da beispielsweise die Tabellen mit der Zuordnung zwischen den ersetzten Pans und den Platzhaltern getrennt von den Verarbeitungsprogrammen sicher gespeichert werden, besteht für einen Dritten keine Möglichkeit, aus den in der Verarbeitung befindlichen Datensätzen, welche mithilfe der Platzhalter pseudonymisiert sind, auf die zugehörigen PANs zurück zu schließen.

Sensitive Datenstrings wie PANs können verschiedene Systeme eines Unternehmens durchlaufen und dabei je nach Anwendung auch gespeichert werden. Zusätzlich werden zunehmend Systeme/Daten in die Cloud verlegt.

Aus der US 2013/0198851 A1 ist eine Tokenisierungsvorrichtung bekannt, die verteilte Tokenisierungssysteme zum Erzeugen von Tokens, die sensitiven Informationen entsprechen, umfasst. Ein Tokenisierungssystem kann mehrere physikalisch voneinander verschiedene Hardwareplattformen umfassen, die jeweils einen Tokenisierungsserver und eine Datenbank aufweisen. Ein Tokenisierungsserver kann dabei Teile einer sensitiven Zahl durch eine vorbestimmte Anzahl von Runden eines Feistelnetzwerks laufen lassen.

Es besteht daher ein Bedürfnis nach einem zentralen System zum Ersetzen eines Datenstrings durch einen Platzhalter für ein ganzes Unternehmen, das allen Anwendungen den Schutz und ggf. den kontrollierten Zugriff auf sensitive Datenstrings erlaubt. Dabei gilt es, eine zentrale Administration zu ermöglichen, gleichzeitig jedoch überall im Unternehmen anwendungsnahe Zugriffspunkte ohne lange Netzwerk-Kommunikationswege zu bietet.

Weiterhin gilt es, Sicherheitsprobleme in "untrusted" Cloud Umgebungen, beispielsweise bei einem externen Dienstleister, zu adressieren. Eine einfache Skalierung bei wachsendem Ersetzungsaufkommen sowie Ausfallsicherheit, selbst bei Ausfall einzelner Server, auf denen die Ersetzungseinrichtung ausgeführt wird, sind weitere Anforderungen.

Zumindest eine der vorgenannten Aufgaben wird durch ein computerimplementiertes Verfahren zum Ersetzen eines Datenstrings durch einen Platzhalter in einer Ersetzungseinrichtung gelöst, wobei die Ersetzungseinrichtung eine Mehrzahl von das Ersetzen ausführenden Knoten eines verteilten Systems umfasst, eine mit den Knoten verbundene Verwaltungseinrichtung alle zur Initialisierung der Knoten notwendigen Konfigurationsdaten der Knoten speichert, mindestens ein Knoten zentral mit den von der Verwaltungseinrichtung zur Verfügung gestellten Konfigurationsdaten initialisiert wird und die Knoten die Konfigurationsdaten nicht permanent speichern, so dass bei einem Herunterfahren oder bei einem Ausfall eines Knoten alle zuvor auf dem Knoten vorhandenen Konfigurationsdaten gelöscht werden,
mit den Schritten
Empfangen des Datenstrings von einer Anwendung,
Auswählen mindestens eines das Ersetzen ausführenden Knoten aus der Mehrzahl von Knoten des verteilten Systems,
Weiterleiten des Datenstrings an den mindestens einen ausgewählten Knoten,
Erzeugen eines den Datenstring ersetzenden Platzhalter in dem mindestens einen ausgewählten Knoten und
Übergeben des Platzhalters an die Anwendung,
wobei zumindest, in einem Zustand, in dem zumindest ein Knoten nicht initialisiert ist und zumindest ein Knoten initialisiert ist, der zumindest eine initialisierte Knoten den zumindest einen nicht initialisierten Knoten bei dem hochfahren initialisiert, sodass die Verwaltungseinrichtung abgeschaltet werden kann oder die Verbindung zwischen der Verwaltungseinrichtung und den Knoten unterbrochen werden kann, oder die Verwaltungseinrichtung die Konfigurationsdaten für die Knoten mindestens einer Überwachungseinrichtung zur Verfügung stellt, die die nicht initialisierten Knoten bei einem Hochfahren initialisiert, sodass die Verwaltungserrichtung abgeschaltet werden kann oder die Verbindung zwischen der Verwaltungseinrichtung und den Knoten unterbrochen werden kann, und wobei die Knoten und die Verwaltungseinrichtung räumlich getrennt sind, wobei die Knoten in der Cloud eines Serviceanbieters angeordnet sind, während die Konfigurationsdaten ausschließlich in der Verwaltungseinrichtung des die Anwendung betreibenden Unternehmens gespeichert sind.

Unter einer Ersetzungseinrichtung im Sinne der vorliegenden Anmeldung wird eine Einrichtung, insbesondere aber ein Programm oder ein Programmabschnitt verstanden, welche das Erzeugen des Platzhalters aus dem Datenstring sowie das Wiederherstellen des Datenstrings ausführen.

Eine Anwendung im Sinne der vorliegenden Anmeldung ist irgendeine Einrichtung, insbesondere aber ein Programm oder ein Programmabschnitt, welcher vorzugsweise einen Datensatz verarbeitet und in diesem beispielsweise eine Ersetzen des Datenstrings durch den Platzhalter und umgekehrt durchführt.

In einer Ausführungsform der Erfindung erfolgt das Ersetzen des Datenstrings durch den Platzhalter irreversibel. Eine Wiederherstellung des ursprünglichen Datenstrings aus dem Platzhalter ist in einer solchen Ausführungsform nicht möglich, aber für einige Anwendungsszenarien auch gar nicht erforderlich.

In einer alternativen Ausführungsform hingegen ist das Verfahren zum Ersetzen des Datenstrings reversibel und zum Wiederherstellen des Datenstrings aus dem Platzhalter in der Ersetzungseinrichtung weist das Verfahren die Schritte auf
Empfangen des Platzhalters von der Anwendung,
Auswählen mindestens eines das Wiederherstellen ausführenden Knoten aus der Mehrzahl von Knoten des verteilten Systems,
Weiterleiten des Platzhalters an den mindestens einen ausgewählten Knoten,
Erzeugen des wiederherzustellenden Datenstrings für den Platzhalter in dem mindestens einen ausgewählten Knoten und
Übergeben des Datenstrings an die Anwendung.

Während alle Schritte, welche der Erzeugung des Platzhalters und damit der Ersetzung des Datenstrings durch den Platzhalter und ggf. umgekehrt der Wiederherstellung des Datenstrings aus dem Platzhalter dienen, in dem mindestens einen ausgewählten Knoten ablaufen, können die anderen Verfahrensschritte, beispielsweise das Übergeben des Platzhalters an die Anwendung sowie das Auswählen des ausführenden Knoten auch von anderen Komponenten oder Elementen des Systems übernommen werden.

In einer Ausführungsform der Erfindung sind die Knoten virtuelle Datenverarbeitungseinrichtungen. Diese können in einer Ausführungsform über eine Mehrzahl von physischen Servern verteilt sein.

In einer Ausführungsform sind die Knoten virtuelle Datenverarbeitungseinrichtungen, die nicht auf persistenten Speicher zugreifen. Dadurch hinterlassen die Knoten bei einem Absturz oder bei einem Herunterfahren keinerlei Spuren oder Daten und erhöhen somit die Sicherheit des erfindungsgemäßen Verfahrens. Dabei werden im Sinne der vorliegenden Anmeldung als persistente Speicher Datenspeicher bezeichnet, deren gespeicherte Informationen auf Dauer erhalten bleiben, also auch während der Rechner nicht in Betrieb ist oder nicht mit Strom versorgt wird.

In einer Ausführungsform werden die Knoten und/oder die Verwaltungseinrichtung auf einer ausschließlich für diesen Zweck ausgestalteten Hardware ausgeführt. Die Ausführung auf einer spezialisierten Hardware erhöht zum einen die Sicherheit und verringert zum anderen den Installationsaufwand bei einem Benutzer.

In einer weiteren Ausführungsform werden bei einem Herunterfahren eines Knoten alle zuvor auf dem Knoten vorhandenen Daten gelöscht.

Erfindungsgemäß dient die Verwaltungseinrichtung zumindest dem Bereitstellen von zur Initialisierung mindestens eines Knotens erforderlichen Konfigurationsdaten. In einer Ausführungsform der Erfindung stellt die Verwaltungseinrichtung zum Initialisieren der Knoten aus einem Zustand, in dem alle Knoten heruntergefahren sind, alle zur Initialisierung erforderlichen Konfigurationsdaten zumindest einem Knoten zur Verfügung.

Die Konfigurationsdaten müssen somit nicht in den einzelnen Knoten gespeichert sein. Dies erlaubt eine räumliche Trennung zwischen den Knoten und der Verwaltungseinrichtung, insbesondere eine Anordnung der Knoten in der Cloud eines Serviceanbieters, während die Konfigurationsdaten ausschließlich in der Verwaltungseinrichtung des die Anwendung betreibenden Unternehmens gespeichert sind.

In einer Ausführungsform umfassen die Konfigurationsdaten auch die geheimen Daten, welche den Algorithmus für das Ersetzen des Datenstrings durch den Platzhalter und optional für das Wiederherstellen des Datenstrings definieren.

Die Knoten werden zentral von der Verwaltungseinrichtung verwaltet. Auch die Verwaltungseinrichtung ist in einer Ausführungsform eine virtuelle Verarbeitungseinrichtung, die zweckmäßigerweise auf einer Mehrzahl von physischen Servern verteilt ist.

In einer Ausführungsform sind die Knoten des verteilten Systems so eingerichtet, dass in einem Zustand, in dem zumindest ein Knoten nicht initialisiert ist und zumindest ein Knoten initialisiert ist, der zumindest eine initialisierte Knoten den zumindest einen nicht initialisierten Knoten bei einem Hochfahren initialisiert. Solange mindestens ein Knoten betriebsbereit, d.h. initialisiert ist, sind die Knoten selbsinitialisierend. Auf diese Weise ist während des Betriebs der Knoten kein Eingreifen der Verwaltungseinrichtung zum initialisieren einzelner Knoten notwendig. Die Verwaltungseinrichtung kann abgeschaltet werden oder die Verbindung zwischen der Verwaltungseinrichtung und den Knoten kann unterbrochen werden.

In einer Ausführungsform der Erfindung umfasst die Ersetzungseinrichtung eine Überwachungseinrichtung, wobei die Verwaltungseinrichtung die Konfigurationsdaten für die Knoten mindestens einer Überwachungseinrichtung zur Verfügung stellt, die die nicht initialisierten Knoten bei einem Hochfahren initialisiert, so dass die Verwaltungseinrichtung abgeschaltet werden kann.

In einer Ausführungsform speichert die Überwachungseinrichtung die Konfigurationsdaten nicht permanent, so dass bei einem Herunterfahren oder bei einem Ausfall der Überwachungseinrichtung alle zuvor auf der Überwachungseinrichtung vorhandenen Konfigurationsdaten gelöscht werden. Die Konfigurationsdaten müssen in diesem Fall der Überwachungseinrichtung erneut von der Verwaltungseinrichtung bereitgestellt werden.

In einer Ausführungsform der Erfindung ist die Überwachungseinrichtung eine virtuelle Datenverarbeitungseinrichtung, die nicht auf persistenten Speicher zugreift.

In einer Ausführungsform der Erfindung ist die Anwendung über eine Vermittlungseinrichtung mit den Knoten verbunden, wobei die Vermittlungseinrichtung eine oder mehrere Netzwerkverbindung(en) zu einem oder mehreren Knoten verwaltet. In dieser Ausführungsform trifft die Vermittlungseinrichtung die Auswahl über diejenigen Knoten, welche das Ersetzen ausführen.

Dabei werden in einer weiteren Ausführungsform mehrere Ersetzungen für eine Anwendung gleichzeitig auf mehreren Knoten ausgeführt.

Bei einem Ausfall eines Knoten wird in einer Ausführungsform automatisch die Ersetzung auf einem oder mehreren der verbleibenden Knoten ausgeführt.

In einer Ausführungsform der Erfindung ist eine Buchführungseinrichtung vorgesehen, welche die Anzahl der von der Anwendung empfangenen Datenstrings und/oder die Anzahl der von der Anwendung empfangenen Platzhalter ermittelt. Auf diese Weise ist eine Abrechnung der Dienstleistungen "Ersetzen" und/oder "Wiederherstellen" in Abhängigkeit der durchgeführten Ersetzungen oder Wiederherstellungen möglich. Es versteht sich, dass es bei dieser Ausführungsform insbesondere sinnvoll ist, zu ermitteln wie oft eine Anwendung, in einer Ausführungsform eine Mehrzahl von Anwendungen einer Mehrzahl von Kunden, auf das erfindungsgemäße Verfahren gemäß einer Ausführungsform der vorliegenden Erfindung zugreift.

In einer Ausführungsform der Erfindung werden zum Ermitteln der Anzahlen statistische Verfahren verwendet, um die Anzahl der unterschiedlichen Datenstrings, die ersetzt oder wiederhergestellt wurden, abzuschätzen.

In einer Ausführungsform der Erfindung ist die Anwendung über eine Netzwerkverbindung, insbesondere eine Internetverbindung, mit der Vermittlungseinrichtung und über diese mit den Knoten oder direkt mit den Knoten verbunden.

In weiteren Ausführungsform ist die Netzwerkverbindung zwischen der Anwendung und den Knoten mit einem Protokoll gesichert, welches die Integrität der Daten schützt und/oder eine sichere Authentifizierung mindestens serverseitig ermöglicht und/oder gegen unbefugtes Mitlesen schützt. Ein Protokoll, welches diese Anforderungen erfüllt ist beispielsweise SSH.

In einer weiteren Ausführungsform sind die Knoten über eine Netzwerkverbindung, insbesondere über eine Internetverbindung, mit der Verwaltungseinrichtung und ggf. zusätzlich mit einer Buchführungseinrichtung verbunden.

In einer Ausführungsform der Erfindung wird mindestens eine Komponente der Ersetzungseinrichtung, insbesondere die Knoten, die Verwaltungseinrichtung, die Vermittlungseinrichtung und/oder die Überwachungseinrichtung, in einer Cloud-Umgebung ausgeführt.

In einer Ausführungsform der Erfindung authentifizieren die Knoten die Vermittlungseinrichtung und/oder eine Abfangeinrichtung diejenige Anwendung und/oder einen Benutzer derjenigen Anwendung, welche eine Ersetzung ausführen lässt.

In einer Ausführungsform der Erfindung prüfen die Knoten, die Vermittlungseinrichtung und/oder eine Abfangeinrichtung eine Berechtigung der Anwendung und/oder eines Benutzers der Anwendung Ersetzungen ausführen zu lassen.

Unter einem Datenstring im Sinne der vorliegenden Anmeldung wird jedwede Art von Zeichenfolge verstanden. Ein Datensatz setzt sich aus einem oder mehreren solcher Datenstrings zusammen. Dabei können die Datenstrings in einem Datensatz voneinander abgesetzt oder auf sonstige Weise markiert sein, sie müssen es aber nicht. Insbesondere kann ein Datensatz aus einer einzigen Zeichenfolge bestehen, die eine Mehrzahl von Datenstrings umfasst. Eine Ausgestaltung eines Datensatzes im Sinne der vorliegenden Erfindung ist eine Nachricht, welche den ursprünglichen Datenstring oder den Platzhalter umfasst.

Ein Datensatz kann in einer Ausführungsform eine Nachricht sein, welche eine Finanztransaktion beschreibt, wobei die Nachricht beispielsweise Informationen über Ort, Gegenstand und Preis der Transaktion enthält.

In einer weiteren Ausführungsform der Erfindung ist der zu ersetzende Datenstring zumindest ein Teil einer Kontonummer oder einer Kartennummer. Dabei dient das Ersetzen einer Karten- oder Kontonummer als Datenstring durch einen pseudonymisierten Platzhalter hier nur der Ausführung eines Beispiels. Grundsätzlich sind Ersetzungsverfahren aber für alle Anwendungen geeignet, in denen bestimmte Daten, insbesondere Personendaten oder personenbezogene Daten, anonymisiert werden müssen.

In der weiteren Ausführungsform der Erfindung wird das Verfahren auf einem Server für ein bargeldloses Zahlungsverkehrssystem ausgeführt.

In einer Ausführungsform der Erfindung wird zum Erzeugen des dem zu ersetzenden Datenstring zugeordneten und diesen ersetzenden Platzhalters aus dem Datenstring ein Platzhalter erzeugt, welcher eine verschlüsselte Repräsentation des ursprünglichen Datenstrings ist.

Das erfindungsgemäße Erzeugen eines dem Datenstring zugeordneten und diesen ersetzenden Platzhalters beruht in einer alternativen Ausführungsform auf einer Tokenisierung des Datenstrings, wobei der Datenstring durch einen Token als Platzhalter ersetzt wird.

Unabdingbare Anforderungen an eine reversible Tokenisierung sind dabei die Umkehrbarkeit des Verfahrens, d.h. jeder Token muss sich unzweideutig wieder auf den ursprünglichen Datenstring abbilden lassen, und die Formaterhaltung der Tokenisierung, um den Datensatz, in welchem ein Datenstring durch ein Token ersetzt wurde, weiterverarbeiten, insbesondere speichern, zu können.

In einer Ausführungsform der Erfindung werden die Token als Platzhalter vorab zufällig erzeugt und eine Zuordnung zwischen jedem ersetzten Datenstring und dem jeweiligen ersetzenden Token in einer Tabelle abgelegt.

Da die Tabelle mit der Zuordnung zwischen den ersetzten Datenstrings und den ersetzenden Token von den Knoten sicher gespeichert werden, besteht für einen Dritten keine Möglichkeit, aus den in der Verarbeitung befindlichen Datensätzen, welche mithilfe der Token pseudonymisiert sind, auf die zugehörigen Datenstrings zurück zu schließen.

Alternativ kann die Tokenisierung das Ersetzen auch durch eine bijektive mathematische Funktion erfolgen, welche auf den zu verschlüsselnden ersetzenden Datenstring angewandt wird und die eine eindeutige Abbildung des unverschlüsselten Datenstrings auf den Token Platzhalter und des Token Platzhalters auf den unverschlüsselten Datenstring bereitstellt.

Aus dem europäischen Patent EP 2 735 991 B1 ist zudem ein weiteres Tokenisierungsverfahren zum Erzeugen von Platzhaltern bekannt. In diesem Verfahren wird der den ursprünglichen Datenstring ersetzende Token wird zum einen durch in einer Nachschlagetabelle bzw. Ersetzungstabelle gespeicherte zufällige Zeichen generiert, zum anderen jedoch durch eine Funktion, welche auf den zu ersetzenden Datenstring selbst angewandt wird und im Ergebnis dann auf die ersetzenden Zeichen verweist.

Dabei dient eine auf den ursprünglichen Datenstring angewandte mathematische Funktion dem Berechnen eines Index, der denjenigen Eintrag der Ersetzungstabelle bestimmt, welche als nächstes zum Ersetzen eines Teils des unverschlüsselten Datenstrings verwendet werden soll.

In dieser Ausführungsform erfolgt das Erzeugen des Token aus dem unverschlüsselten Datenstring zum Teil dadurch, dass ein Index auf die Ersetzungstabelle mathematisch aus dem unverschlüsselten Datenstring selbst generiert wird, die einzelnen Zeichen des unverschlüsselten Datenstrings werden jedoch durch zufällige Ersetzungswerte, die aus der Ersetzungstabelle abgeleitet werden, ersetzt.

Dieses Erzeugen des Token basiert auf einem unbalancierten Feistelnetzwerk, bei welchem der Datenstring zur Erzeugung des Token zunächst in zwei Teilstrings zerlegt wird. Dabei besteht der erste Teilstring aus einem einzigen Zeichen des unverschlüsselten Strings und der zweite Teilstring aus den restlichen Zeichen des unverschlüsselten Datenstrings. Dabei wird der Begriff "Zeichen" vom Fachmann breit verstanden. Insbesondere kann das einzige Zeichen des ersten Teilstrings mehrere Elemente des unterliegenden Zeichensatzes bzw. Alphabets umfassen, wobei diese mehreren Elemente für das Ersetzen wie ein einziges Zeichen verarbeitet werden.

Es ist sogar eine Ausführungsform der Erfindung bevorzugt, bei welcher die Anzahl der Elemente des unverschlüsselten Datenstrings, welche das einzige Zeichen des ersten Teilstrings bilden, größer als eins ist.

Dieses Tokenisierungsverfahren macht es insbesondere überflüssig, den ersetzten unverschlüsselten Datenstring in die Ersetzungstabelle zu schreiben, da die Wiederherstellung ausschließlich mithilfe des Token, der Berechnung des Index der Ersetzungstabelle sowie des entsprechenden Eintrags der Ersetzungstabelle erfolgen kann. Auf diese Weise kann die Ersetzungstabelle vollständig vorab generiert und beispielsweise auf Backup-Systeme verteilt werden. Eine Synchronisierung zwischen in verschiedenen Systemen gehaltenen identischen Ersetzungstabellen zu einem späteren Zeitpunkt ist nicht erforderlich. Kollisionen werden inhärent vermieden.

Die Wiederherstellung eines unverschlüsselten ursprünglichen Datenstrings aus dem Token setzt jedoch voraus, dass der Token in irgendeiner Weise einem Datenstring zugeordnet werden kann.

In einer Ausführungsform wird beim Erzeugen des Token das Ersetzungszeichen aus dem durch den Index bestimmten Eintrag der Ersetzungstabelle und dem zu ersetzenden Zeichen berechnet und beim Wiederherstellen des unverschlüsselten Datenstrings wird das Ersetzungszeichen aus dem durch den Index bestimmten Eintrag und dem zu ersetzenden Zeichen berechnet.

Bei einer derartigen Ausgestaltung des Verfahrens ist es zweckmäßig, wenn die Rechenoperationen zum Berechnen des Ersetzungszeichens beim Erzeugen des Token und beim Wiederherstellen unverschlüsselten Datenstrings zueinander inverse mathematische Operationen, insbesondere Addition und Subtraktion oder Multiplikation und Division, sind.

In einer Ausführungsform der Erfindung ist die Größe des für den zu ersetzenden Datenstring verwendeten Alphabets gleich der Größe des Alphabets, aus welchem die Ersetzungszeichen bestehen.

Um eine ausreichende Sicherheit zu gewährleisten, ist es vorteilhaft, wenn die Anzahl der Wiederholungen der Verfahrensschritte beim Erzeugen des Token und beim Wiederherstellen des unverschlüsselten Datenstrings mindestens n +1, vorzugsweise jedoch 2n, beträgt, wobei n die Länge des zu ersetzenden Datenstrings geteilt durch die Anzahl der pro Ersetzungsvorgang ersetzten Elemente des Datenstrings ist.

In einer Ausführungsform der Erfindung umfasst das Berechnen des Index der Ersetzungstabelle bei dem Erzeugen des Token oder dem Wiederherstellen des unverschlüsselten Datenstrings aus einem Token folgende Schritte, Berechnen eines Hash-Werts durch Anwenden einer Hash-Funktion auf eine Binäreingabe, die den ersten Teilstring des Datenstrings umfasst und Bestimmen der x signifikantesten Bits des Hash-Werts als Index des zu verwendenden Ersetzungswerts, wobei x die Anzahl von Bits ist, die benötigt werden, um alle Einträge der Ersetzungstabelle mit einem eindeutigen Index zu versehen. Bei einer Trunkierung auf x Bits kann die Ersetzungstabelle 2^{x} Einträge aufweisen, die alle mit einem eindeutigen, durch die x Bits darstellbaren Index versehen sind.

In einer Ausführungsform der Erfindung umfasst die Binäreingabe, auf welche der Hash-Wert angewandt wird, zusätzlich einen Binärstring (salt) der Länge s und/oder die Ordnung der Wiederholung. Dabei wird unter der Ordnung der Wiederholung die Anzahl der Wiederholungen der Verfahrensschritte zum Ersetzen der einzelnen Zeichen des Datenstrings einschließlich der aktuellen Wiederholungsrunde verstanden.

In einer Ausführungsform der Erfindung umfasst der Binärstring (salt) einen nicht zu verschlüsselnden Teilstring des zu verschlüsselnden Datenstrings und/oder einen willkürlich gewählten String. Insbesondere kann der Binärstring (salt) aus einer Kombination von Strings zusammengesetzt sein, um die Sicherheit des Systems zu erhöhen.

Mit Hilfe eines solchen hier als salt bezeichneten Binärstrings, welcher für das Berechnen des Index für die zu verwendenden Ersetzungswerte herangezogen werden kann, kann die Sicherheit des verwendeten Verfahrens erhöht werden. Wird als Binärstring ein willkürlich gewählter String verwendet, so kann dessen Wert entweder willkürlich von dem Administrator der Tokenisierungseinrichtung festgelegt werden oder beispielsweise auch ein festgelegter Bestandteil des Codes für die Tokenisierungseinrichtung sein. In einer Ausführungsform der Erfindung ist der Binärstring für das Berechnen des Index ein nicht zu verschlüsselnder Teilstring eines unverschlüsselten Datenstrings, beispielsweise einer PAN.

In einer Ausführungsform ist ferner eine Abfangeinrichtung auf einem Datenkanal vorgesehen, welche für einen in einer ersten Richtung übertragenen Datensatz die Schritte ausführt
a. Abfangen des über den Datenkanal in der ersten Richtung übertragenen Datensatzes,
b. Identifizieren des zu ersetzenden Datenstrings in dem abgefangenen Datensatz,
c. Weiterleiten des zu ersetzenden Datenstrings an mindestens einen der Knoten der Ersetzungseinrichtung zum Bestimmen eines den Datenstring ersetzenden Platzhalters ,
d. Empfangen des den Datenstring ersetzenden Platzhalters von dem mindestens einen Knoten,
e. Austauschen des Datenstrings in dem Datensatz durch den Platzhalter,
f. Weiterleiten des Datensatzes mit dem Platzhalter in der ersten Richtung über den Datenkanal, und
wobei die Abfangeinrichtung für einen in einer zweiten Richtung übertragenen Datensatz die Schritte ausführt
g. Abfangen des über den Datenkanal in der zweiten Richtung übertragenen Datensatzes,
h. Identifizieren eines Platzhalters in dem abgefangenen Datensatz,
i. Weiterleiten des Platzhalters an mindestens einen der Knoten der Ersetzungseinrichtung zum Wiederherstellen des durch den Platzhalter ersetzten Datenstrings,
j. Empfangen des durch den Platzhaltern ersetzten Datenstrings von dem mindestens einen Knoten der Ersetzungseinrichtung,
k. Austauschen des Platzhalters in dem Datensatz durch den Datenstring und
I. Weiterleiten des Datensatzes mit dem Datenstring über den Datenkanal.

Die Idee einer solchen Abfangeinrichtung ist es, den Eingabe-/Ausgabekanal einer weiteren Anwendung zur Verarbeitung des Datensatzes, d.h. einer Anwendung, zu überwachen und ohne Eingriff in die anderen Einrichtungen des Systems in allen Datensätzen, welche unverschlüsselte sicherheitsrelevante Datenstrings enthalten, diese durch Platzhalter zu ersetzen.

Die so von der Abfangeinrichtung modifizierten Datensätze, aus denen der Datenstring nicht mehr ableitbar ist, werden dann von einer weiteren Anwendung weiterverarbeitet, wobei diese Ersetzung des unverschlüsselten Datenstrings durch den Platzhalter zu keinerlei Änderung bei der Verarbeitung führt, da der Platzhalter den Datenstring vorzugsweise formaterhaltend ersetzt.

In einer Ausführungsform ist die Abfangeinrichtung die Anwendung oder Teil einer solchen.

Insbesondere wird der Datensatz mit dem Platzhalter in einer Ausführungsform in einer weiteren Anwendung gespeichert. In einem Server für ein bargeldloses Zahlungsverkehrssystem ist diese weitere Einrichtung beispielsweise einen Transaktionsdatenspeicher.

In einer Ausführungsform der Erfindung umfasst das Identifizieren des zu ersetzenden Datenstrings oder des Platzhalters in einem Datensatz ein Bestimmen der Länge und der Position des Datenstrings oder des Platzhalters in dem Datensatz.

Dazu kann in einer Ausführungsform vorgesehen sein, dass der Datensatz ein Identifikationsfeld aufweist, das Informationen über die Position des zu ersetzenden Datenstrings in den Datensatz enthält, wobei zum Bestimmen der Position des Datenstrings oder des Platzhalters in dem Datensatz das Identifikationsfeld ausgelesen wird.

Insbesondere, wenn der Datensatz kein solches Identifikationsfeld umfasst, ist es zweckmäßig, wenn der zu ersetzende Datenstring ein eindeutig identifizierbares Muster bzw. eine Struktur aufweist, wobei zum Bestimmen der Position des zu ersetzenden Datenstrings oder des Platzhalters in dem Datensatz ein Vergleich aller in dem Datensatz enthaltenen Strings mit einem gespeicherten eindeutig identifizierbaren Muster erfolgt. Es versteht sich, dass die zu ersetzenden Datenstrings auch eines aus einer Mehrzahl von Mustern aufweisen kann, wobei dann alle in dem Datensatz enthaltenen Strings mit einer Mehrzahl von gespeicherten, eindeutig identifizierbaren Mustern verglichen wird.

In einer Ausführungsform der Erfindung wird, wenn der zu ersetzende Datenstring an einer Mehrzahl von Positionen in dem Datensatz auftritt, dieser an allen Stellen durch den Platzhalter ersetzt.

Sollen nun beispielsweise die vollständigen Daten einer Transaktion einschließlich dem unverschlüsselten Datenstrings an eine andere Einrichtung im System übertragen werden, so wird der zusammen mit der angegebenen Transaktionsnummer gespeicherte Platzhalter im Speicher identifiziert und sodann mit dem zuvor beschriebenen erfindungsgemäßen Verfahren aus dem Platzhalter der ursprüngliche Datenstring wiederhergestellt.

Insoweit die oben beschriebenen Ausführungsformen des erfindungsgemäßen Verfahrens zumindest teilweise realisiert werden können, wobei eine softwaregesteuerte Datenverarbeitungseinrichtung verwendet wird, so ist es offensichtlich, dass ein Computerprogramm, das eine solche Softwaresteuerung bereitstellt und ein Speichermedium, auf welchem solch ein Computerprogramm gespeichert ist, als Aspekte der Erfindung in Betracht zu ziehen sind.

Weitere Vorteile, Merkmale und Anwendungsmöglichkeiten der vorliegenden Erfindung werden anhand der folgenden Beschreibung einer Ausführungsform und der dazugehörigen Figuren deutlich.
- Figur 1: ist eine schematische Darstellung einer Architektur zum Ausführen einer Ausführungsform des erfindungsgemäßen Verfahrens.
- Figur 2: ist eine schematische Darstellung einer weiteren Architektur zum Ausführen einer weiteren Ausführungsform des erfindungsgemäßen Verfahrens.
- Figur 3: zeigt schematisch ein Zahlungsverkehrsabwicklungssystem mit einer erfindungsgemäßen sicheren Verarbeitung von PANs.
- Figur 4: zeigt anhand eines Flussdiagramms die Tokenisierung eines Datenstrings gemäß einer Ausführungsform des erfindungsgemäßen Verfahrens.
- Figur 5: zeigt einen Schritt eines Flussdiagramms zum Wiederherstellen des unverschlüsselten Datenstrings gemäß einer Ausführungsform des erfindungsgemäßen Verfahrens.
- Figur 6: erläutert schematisch die Erzeugung des Index der Ersetzungstabelle gemäß einer Ausführungsform des erfindungsgemäßen Verfahrens.

In den Figuren sind gleiche Elemente mit gleichen Bezugszeichen bezeichnet.

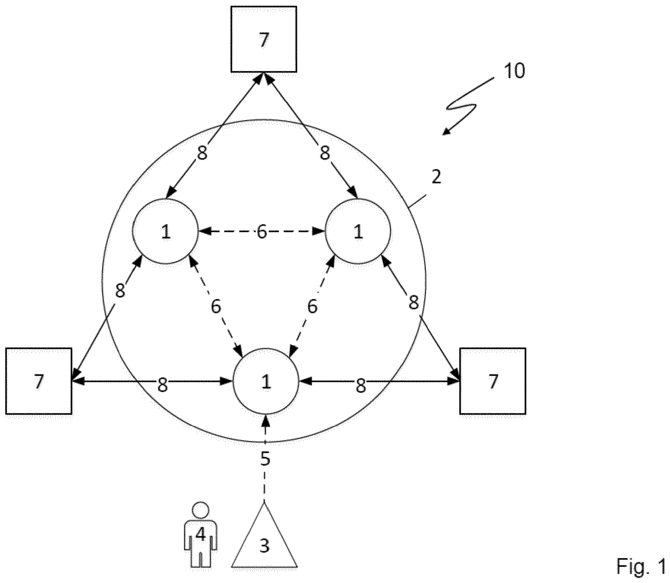

Figur 1 zeigt schematisch eine Architektur zur Realisierung einer Ausführungsform des erfindungsgemäßen Verfahrens zum Ersetzen eines Datenstrings durch einen Platzhalter.

Die Tokenisierungseinrichtung 10 umfasst in der dargestellten Ausführungsform drei Knoten 1, welche die Tokenisierung, d.h. das Generieren eines Platzhalters aus einem Datenstring, sowie das Wiederherstellen der unverschlüsselten Datenstrings ausführen, eine Verwaltungseinrichtung 3 und eine Buchführungseinrichtung (in den Figuren nicht dargestellt).

Die Knoten 1 sind virtuelle Datenverarbeitungseinrichtungen in einem Cluster 2, deren Betrieb über eine Mehrzahl von physischen Servern verteilt ist. Die Knoten greifen nicht auf persistenten Speicher zu. Dadurch hinterlassen sie bei einem Absturz oder einem Herunterfahren keinerlei Spuren oder Daten und erhöhen somit die Sicherheit des erfindungsgemäßen Verfahrens.

Die Knoten 1 werden von einem Administrator 4 zentral über die Verwaltungseinrichtung 3 verwaltet. Auch die Verwaltungseinrichtung 3 ist eine virtuelle Datenverarbeitungseinrichtung, deren Betrieb auf eine Mehrzahl von physischen Servern verteilt ist.

In der Verwaltungseinrichtung 3 sind alle zur Initialisierung der Knoten 1 notwendigen Konfigurationsdaten einschließlich der erforderlichen Schlüssel gespeichert.

Zum Hochfahren der Knoten 1 aus einem Zustand, in dem alle Knoten 1 heruntergefahren sind, lädt die Verwaltungseinrichtung 3 zum Initialisieren der Knoten 1 alle Konfigurationsdaten über eine Netzwerkverbindung 5 auf einen der Knoten 1. Darüber hinaus ist das Cluster 2 selbstinitialisierend: In einem Zustand, in dem zumindest bereits oder noch ein Knoten 1 hochgefahren ist, kann dieser eine hochgefahrene Knoten 1 oder die Mehrzahl von hochgefahrenen Knoten 1 die runtergefahrenen Knoten 1 beim Hochfahren über die in Figur 1 mit 8 bezeichneten Datenverbindungen initialisieren. Auf diese Weise ist während des Betriebs der Knoten 1 kein Eingreifen der Verwaltungseinrichtung 3 in das Cluster 2 notwendig. Die Verbindung 5 zwischen der Verwaltungseinrichtung 3 und den Knoten 1 kann nach dem Initialisieren eines Knotens 1 abgebaut oder unterbrochen werden.

Eine Buchführungseinrichtung (in den Figuren nicht dargestellt) ermittelt die Anzahl der von einer oder einer Mehrzahl von Anwendungen 7 über Netzwerkverbindungen 8 an die Knoten 1 weitergeleiteten unverschlüsselten Datenstrings. Auf diese Weise ist eine Abrechnung der bereitgestellten Dienste in Abhängigkeit von den tatsächlich durchgeführten Ersetzungen möglich.

Von den Knoten 1 in dem Cluster 2 wird der unverschlüsselte Datenstring empfangen und durch einen Token ersetzt. Der Token wird dann wieder an die Anwendung 7 übergeben. Die Anwendung 7 ersetzt danach in dem Datensatz den unverschlüsselten Datenstring durch den Token und verarbeitet den so veränderten sicheren Datensatz weiter oder leitet ihn zur weiteren Verarbeitung weiter.

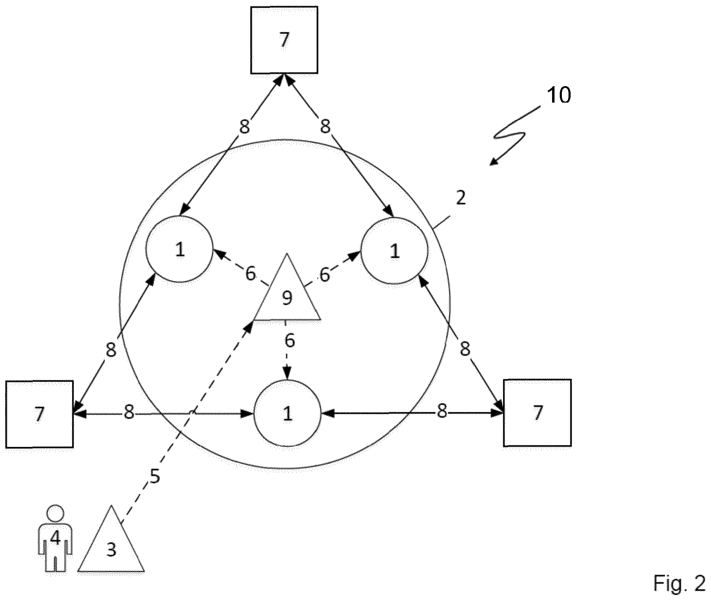

Die Ausführungsform aus Figur 2 unterscheidet sich von der Variante aus Figur 1 dadurch, dass sie zusätzlich eine Überwachungseinrichtung 9 aufweist. Die Verwaltungseinrichtung 3 ist über die Netzwerkverbindung 5 mit der Überwachungseinrichtung 9 verbunden.

Zum Initialisieren der Knoten stellt die Verwaltungseinrichtung 3 die Konfigurationsdaten für die Knoten 1 der Überwachungseinrichtung 9 zur Verfügung, die dann die nicht initialisierten Knoten 1 bei einem Hochfahren initialisiert und die Funktion der Knoten 1 überwacht. Nach einem erstmaligen Initialisieren der Überwachungseinrichtung 9 kann daher die Verwaltungseinrichtung 3 abgeschaltet werden.

Auch die Überwachungseinrichtung 9 speichert die Konfigurationsdaten nicht permanent, so dass bei einem Herunterfahren oder bei einem Ausfall der Überwachungseinrichtung 9 alle zuvor auf der Überwachungseinrichtung 9 vorhandenen Konfigurationsdaten gelöscht werden. Die Konfigurationsdaten müssen in diesem Fall der Überwachungseinrichtung 9 erneut von der Verwaltungseinrichtung 3 bereitgestellt werden.

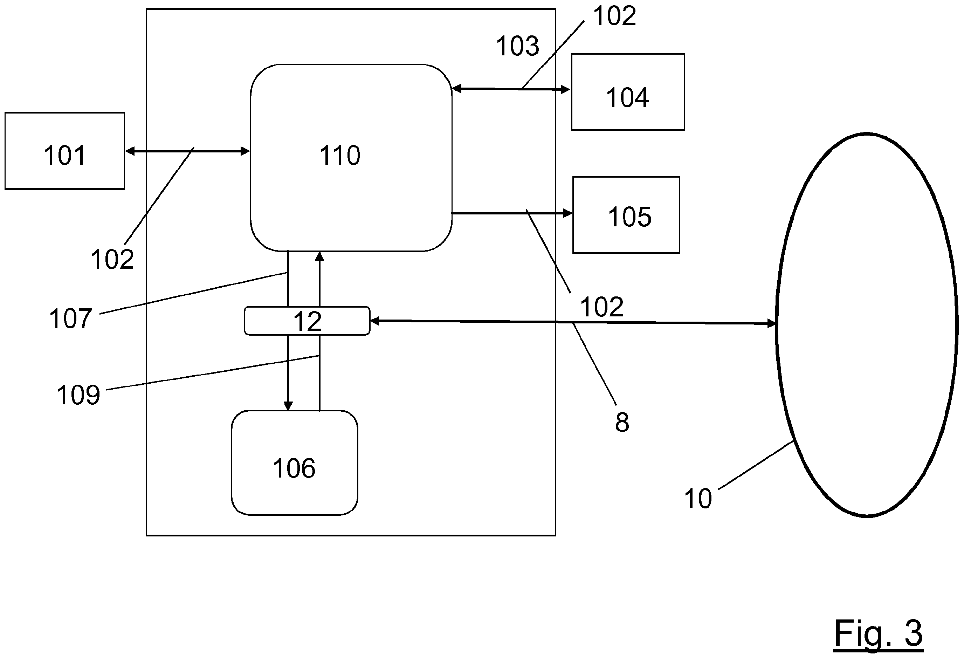

Figur 3 ist eine schematische Darstellung eines Zahlungsverkehrsabwicklungssystems, in welchem das erfindungsgemäße Verfahren zum sicheren Speichern eines Datenstrings zum Einsatz kommt.

Das gezeigte Zahlungsverkehrsabwicklungssystem besteht aus einer Mehrzahl von Kassensystemen 101, von denen eines in Figur 3 dargestellt ist. Über eine Netzwerkverbindung 102 ist das Kassensystem 101 mit einem zentralen Server 103 verbunden. Dieser wiederum ist über Netzwerkverbindungen 102 sowohl mit Kreditkartenanbietern 104 als auch mit dem oder den eigentlichen Zahlungsausgleichssystemen 105 verbunden.

Der Server 103 wiederum weist in der gezeigten Ausführungsform eine zentrale Verarbeitungseinheit 110, eine Abfangeinrichtung 12 sowie einen Transaktionsdatenspeicher 106 auf.

Von den Kassensystemen 101 empfängt der Server 103 über die Netzwerkverbindung 102 Informationen über die zu tätigende Transaktion. Diese Informationen umfassen insbesondere die (Kredit-) Kartennummer des Käufers sowie Angaben zum Preis, dem Abwicklungszeitpunkt des Kaufs und Ähnlichem. Dabei liegen die Informationen über eine Transaktion in Form einer Nachricht vor, welche über die Netzwerkverbindungen 102 von und zu dem Server 103 übertragen wird. Eine solche Nachricht ist ein Datensatz im Sinne der vorliegenden Anmeldung. Die Informationen über die getätigte Transaktion können zum Einen von der zentralen Verarbeitungseinheit 110 auf dem Server 103 unmittelbar, d.h. ohne Zwischenspeicherung, an den Kreditkartengeber 104 oder das Zahlungsausgleichssystem 105 weitergeleitet werden. Dabei erfolgt die Weiterleitung aus Sicht des auf dem Server 103 implementierten Systems im Klartext, d.h. unverschlüsselt. Dies bedeutet jedoch nur, dass für diese Übermittlung der Server 103 selbst keine Verschlüsselung vornimmt. Vielmehr werden die Kanäle 102 von und zu dem Server 103 durch für diese proprietäre Systeme geschützt. Beispielsweise sind die Netzwerke 102 als VPN-Kanäle ausgestaltet.

Aufgabe der auf dem Server 103 implementierten zentralen Verarbeitungseinheit 110 ist es, aufgrund ihrer hohen Verfügbarkeit die Transaktionsinformationen zu verarbeiten und gegebenenfalls solange zu speichern, bis auch die korrespondierenden Einrichtungen der Kreditkartengeber 104 und der Systeme 105 wieder verfügbar sind. Zudem erfolgt üblicherweise eine Speicherung der Transaktionsinformationen zur späteren Abwicklung von Reklamationen sowie zur kumulierten Weiterleitung an die Zahlungsausgleichssysteme 105.

Um eine größtmögliche Sicherheit der Transaktionsdaten bei der Handhabung im Server 103 zu gewährleisten, werden sämtliche in den Transaktionsdaten enthaltenen PANs, welche hier die zu ersetzenden Datenstrings im Sinne der vorliegenden Anmeldung bilden, vor der Speicherung der Daten in dem Transaktionsdatenspeicher 106 durch Token als Platzhalter ersetzt. Dazu wird der Eingangspfad 107 in den Transaktionsdatenspeicher 106 ebenso wie der Ausgangsdatenpfad 109 aus dem Transaktionsdatenspeicher 106 von der Abfangeinrichtung 12 überwacht.

Die Abfangeinrichtung 12 ist in der dargestellten Ausführungsform logisch ein Teil der Tokenisierungseinrichtung 10 ist aber in der Anwendungsumgebung implementiert. Die zentrale Verarbeitungseinrichtung 110 bzw. die auf ihr arbeitende Software und der Transaktionsdatenspeicher 106 bilden Anwendungen zum Verarbeiten des Datensatzes im Sinne der vorliegenden Anmeldung.

Alle zu speichernden Datensätze auf dem Eingangsdatenpfad 107, welche eine PAN, d.h. einen sicherheitsrelevanten Datenstring, enthalten, werden von der Abfangeinrichtung 12 abgefangen. Der Datensatz wird analysiert und der darin enthaltene unverschlüsselte Datenstring wird an die Tokenisierungseinrichtung 10 (auch als Tokenisierungs-Engine bezeichnet) als Ersetzungseinrichtung im Sinne der vorliegenden Anmeldung übergeben.

Das Cluster 2 mit den Knoten ist in der dargestellten Ausführungsform in einer Cloud realisiert. Die Verbindung zwischen der Abfangeinrichtung 12 und der Cloud der Tokenisierungseinrichtung 10 ist daher eine Internetverbindung 8. Der Aufbau der Tokenisierungseinrichtung 10 ist alternativ der gleiche wie in Figuren 1 oder 2 dargestellt.

Von den Knoten des Clusters 2 wird der unverschlüsselte Datenstring empfangen und durch einen Token ersetzt. Der Token wird dann wieder an die Abfangeinrichtung 12 übergeben. Die Abfangeinrichtung 12 ersetzt danach in dem abgefangenen Datensatz den unverschlüsselten Datenstring durch den Token und gibt den so veränderten sicheren Datensatz an den Transaktionsdatenspeicher 106 zum Speichern des Datensatzes aus.

Soll umgekehrt ein Datensatz aus dem Transaktionsdatenspeicher 106 ausgelesen und an die zentrale Verarbeitungseinheit 110 bereitgestellt werden, so muss zunächst der Token des in dem Transaktionsdatenspeicher gespeicherten Datensatzes wieder durch den unverschlüsselten Datenstring ersetzt werden.

Dazu werden alle aus dem Transaktionsdatenspeicher ausgelesenen Datensätze auf dem Ausgangsdatenpfad 109 von der Abfangeinrichtung 12 abgefangen. Jeder Datensatz wird analysiert und der darin enthaltene Token wird an die Knoten der Tokenisierungseinrichtung 10 übergeben. Von Knoten wird der Token empfangen und wieder durch den zugehörigen unverschlüsselten Datenstring ausgetauscht. Der unverschlüsselte Datenstring wird dann wieder an die Abfangeinrichtung 12 übergeben. Die Abfangeinrichtung 12 ersetzt danach in dem aus dem Transaktionsdatenspeicher 106 ausgelesenen und abgefangenen Datensatz den Token durch den unverschlüsselten Datenstring und gibt den so veränderten Datensatz an die zentrale Verarbeitungseinheit 110 zur Weiterverarbeitung des Datensatzes aus. Eine solche Weiterverarbeitung umfasst insbesondere ein Routen einer Nachricht mit dem Datensatz an einen Kartenanbieter 104 oder ein Zahlungsausgleichsystem 105.

Als vorteilhaft bei dieser Architektur erweist es sich, dass in dem Transaktionsdatenspeicher 106 die PANs zu den einzelnen Transaktionen nicht im Klartext vorliegen, sondern durch Token, d.h. zufällig ermittelte Synonyme, pseudonymisiert sind. Ein Angriff auf den Transaktionsdatenspeicher 106 liefert also niemals die Informationen über die PANs, sodass ein solcher Angriff wirkungslos bleibt.

Um eine größtmögliche Sicherheit zu gewährleisten, sind die Knoten 1 und die Verwaltungseinrichtung 3 mit der gespeicherten Indexfunktion und Ersetzungstabelle getrennt voneinander implementiert.

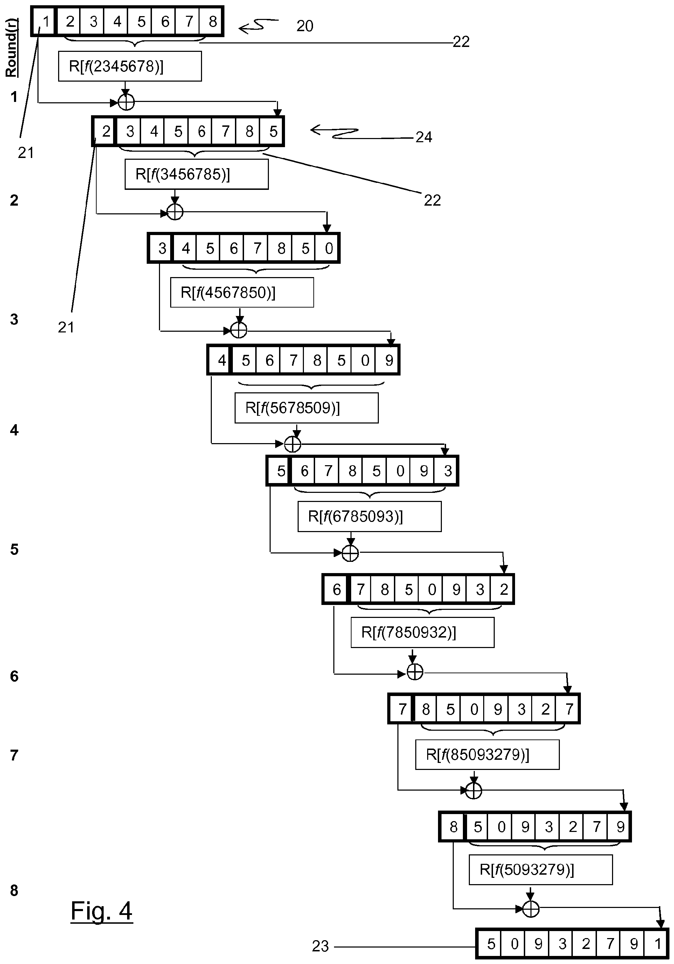

Nachfolgend wird anhand der Figuren 4 bis 6 erläutert, wie für einen eine Transaktion beschreibenden Datensatz das Ersetzen der PAN als sicherheitsrelevantem, unverschlüsseltem Datenstring durch die Tokenisierungseinrichtung 10erfolgt. Es wird zudem auch beschrieben, wie der Token durch den ihm zugeordneten sicherheitsrelevanten, unverschlüsselten Datenstring übersetzt wird, wenn der Datensatz aus dem Server 103 ausgegeben werden soll.

Das Flussdiagramm aus Figur 4 zeigt schematisch anhand eines Beispiels, wie ein unverschlüsselter Datenstring 20, hier eine Kreditkartennummer, mit der exemplarischen Zeichenfolge "12345678" durch einen Token mit der Zeichenfolge "50932791" ersetzt wird. Dieses Ersetzen der PAN durch den Token erfolgt in der in Figur mit 8 gezeigten Engine zur Tokenisierung.

Um alle Zeichen der ursprünglichen PAN als zu verschlüsselndem Datenstring zu ersetzen, muss dieser Prozess achtmal durchlaufen werden, wobei die Ordnungszahl für die entsprechende Runde des Verfahrens in Figur 4 links neben dem Flussdiagramm zu sehen ist. Allerdings ist es unschädlich, wenn das Verfahren noch weitere Male durchlaufen wird, um die Sicherheit bei der Ersetzung der Datenstrings durch den Token zu erhöhen.

Zunächst wird der unverschlüsselte Datenstring 20 mit der genannten Zeichenfolge in zwei Teilstrings 21, 22 zerlegt, wobei der erste Teilstring nur das erste Zeichen bzw. Element "1" des zu verschlüsselnden Datenstrings enthält, während der zweite Teilstring alle weiteren Zeichen des zu verschlüsselnden Datenstrings enthält, nämlich "2345678". Nun gilt es, das einzige Zeichen "1" im ersten Teilstring durch ein zufällig gewähltes Zeichen aus einem Alphabet, mit welchem die Token aufgebaut werden, zu ersetzen.

Dabei hat in der dargestellten Ausführungsform der Zeichensatz, d.h. das Alphabet, aus dem die PAN als unverschlüsseltem Datenstring aufgebaut ist und das Alphabet oder der Zeichensatz, aus dem die Token aufgebaut sind, die gleiche Anzahl von Zeichen.

Formaterhaltend hat auch der Token die gleiche Anzahl von Zeichen wie die diesem Token zugeordnete PAN.

In dem Beispiel aus Figur 4 muss in der ersten Runde das Zeichen "1" aus dem Teilstring mit nur einem Zeichen ersetzt werden. Das Zeichen des Token, durch welches das einzige Zeichen des ersten Teilstrings ersetzt wird, ist in einer Tabelle enthalten, welche in der dargestellten Ausführungsform mindestens acht zufällig ausgewählte Ersetzungszeichen enthält, die in acht jeweils mit einem Index versehenen Einträgen in der Ersetzungstabelle abgelegt sind.

Um zu bestimmen, mit welchem Zeichen der Ersetzungstabelle das im ersten Teilstring enthaltene Zeichen ersetzt werden soll, wird eine Funktion auf den zweiten Teilstring angewendet, welche dazu dient, den Index desjenigen Eintrags der Ersetzungstabelle zu bestimmen, dessen Ersetzungszeichen zum Ersetzen des einzigen Zeichens des ersten Teilstrings verwendet wird.

In dem in Figur 4 dargestellten Flussdiagramm zur Veranschaulichung der eigentlichen Tokenbildung bezeichnet R[x] den Eintrag einer Ersetzungstabelle R mit dem Index x, wobei der Index x ausgerechnet wird mit Hilfe einer Funktion f, angewandt auf die Zeichen des zweiten Teilstrings, hier "2345678".

Im gewählten Beispiel wird das Zeichen "1" des ersten Teilstrings in Runde 1, d.h. der ersten Wiederholung des Ersetzungsverfahrens mit dem Zeichen "5", d.h. demjenigen Eintrag der Ersetzungstabelle, der den Index x=f (2345678) hat, ersetzt.

Das Ersetzungszeichen bildet dann das letzte Zeichen des in der nächsten Runde des Verfahrens zu verarbeitenden Strings 24. Dieser String 24 wird in der zweiten Runde erneut in zwei Teilstrings 21, 22 zerlegt. Von diesen Teilstrings enthält der erste 21 wieder nur ein Zeichen, nämlich das zweite Zeichen "2" des ursprünglichen unverschlüsselten Strings 20 und der zweite 22 enthält die restlichen Zeichen "345678" des ursprünglichen Strings 20 sowie als letztes Zeichen das Ersetzungszeichen "5" aus der ersten Runde.

Dieses Vorgehen wird in dem gezeigten Beispiel aus Figur 4 so oft wiederholt, bis alle Zeichen des ursprünglichen unverschlüsselten Datenstrings durch zufällige Ersetzungszeichen aus der Ersetzungstabelle ersetzt sind. Da der ursprüngliche Datenstring 20 im gezeigten Beispiel eine Länge von acht Zeichen aufweist, sind nach acht Durchgängen sämtliche Zeichen ersetzt und der vollständige Token 23 gebildet. Um die Sicherheit weiter zu erhöhen, sollte das Verfahren zumindest für eine weitere Runde fortgesetzt werden. Dabei ist in der dargestellten Ausführungsform tatsächlich die Anzahl der Durchläufe r doppelt so groß wie die Länge n des ursprünglichen unverschlüsselten Datenstrings.

Im Gesamtsystem, so wie es in Figur 3 gezeigt ist, würde nun der Token 23 aus Figur 4 den ursprünglichen Datenstring, d.h. die PAN 20, ersetzen und der Datensatz würde von der Tokenisierungsengine 8 zum Transaktionsdatenspeicher 6 weitergereicht, wo er dann nicht mehr der PAN zuordenbar ist. Auch in den Knoten 13 ist an keiner Stelle eine direkte Zuordnung zwischen Token und PAN gespeichert. Vielmehr sind in den Knoten 13 lediglich die Ersetzungstabelle mit ihren darin enthaltenen Ersetzungswerten sowie die Funktion f zur Indexberechnung bei der Ersetzung gehalten, dort aber nicht persistent gespeichert.

Erst wenn ein Datensatz vom Server 3 wieder an eine der anderen Komponenten 1, 4, 5 des Systems übergeben werden soll, wird der ein Pseudonym für die PAN im Datensatz darstellende Token wieder durch die PAN im Klartext ersetzt. Dazu werden die für die Ersetzung der PAN durch den Token beschriebenen Schritte in umgekehrter Reihenfolge durchlaufen.

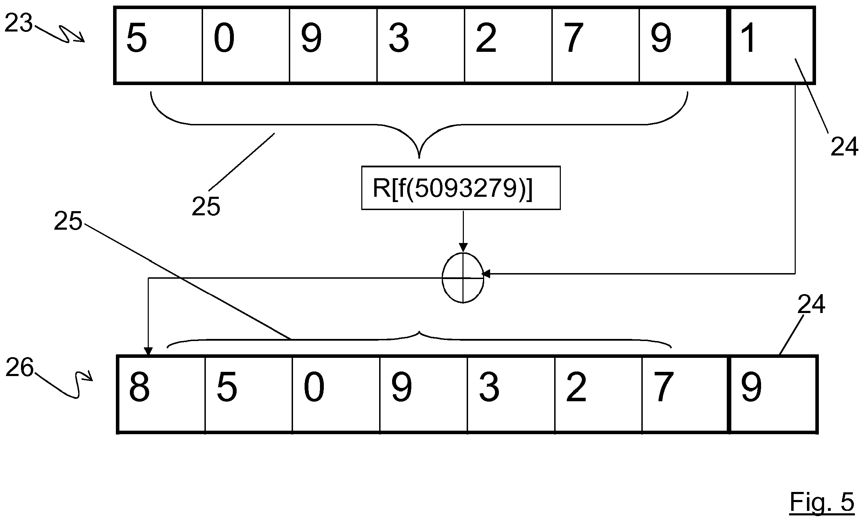

Beispielhaft ist in Figur 5 dazu die erste Runde dargestellt. Der Token 23 wird zunächst in zwei Teilstrings 25, 24 aufgeteilt, nämlich einen ersten Teilstring 25, der alle bis auf das letzte Zeichen des Token enthält und einen zweiten Teilstring 24, welcher als einziges Zeichen das letzte Zeichen des Token, hier das Zeichen "1", enthält. Nun wird das einzige Zeichen des zweiten Teilstrings 24 durch das zum Index des letzten Ersetzungszeichens gehörende Zeichen des ursprünglichen Datenstrings ersetzt.

Zum Erzeugen des entsprechenden Index wird die Indexfunktion f auf die Zeichen des ersten Teilstrings 25 angewandt. In dem dargestellten Beispiel bedeutet dies, dass das Zeichen "1" des zweiten Teilstrings 24 des Token 23 durch das Zeichen "8" der ursprünglichen PAN ersetzt wird. Dieses ursprüngliche Zeichen "8" bildet dann das erste Zeichen des in der nächsten, d.h. zweiten, Runde zu verarbeitenden Strings 26. Dieser weiterzuverarbeitende String 26 wird erneut in einen ersten Teilstring 25 und einen zweiten Teilstring 24 zerlegt, wobei letzterer nur ein einziges, nämlich das letzte Zeichen des weiterzuverarbeitenden Strings 26 aufweist.

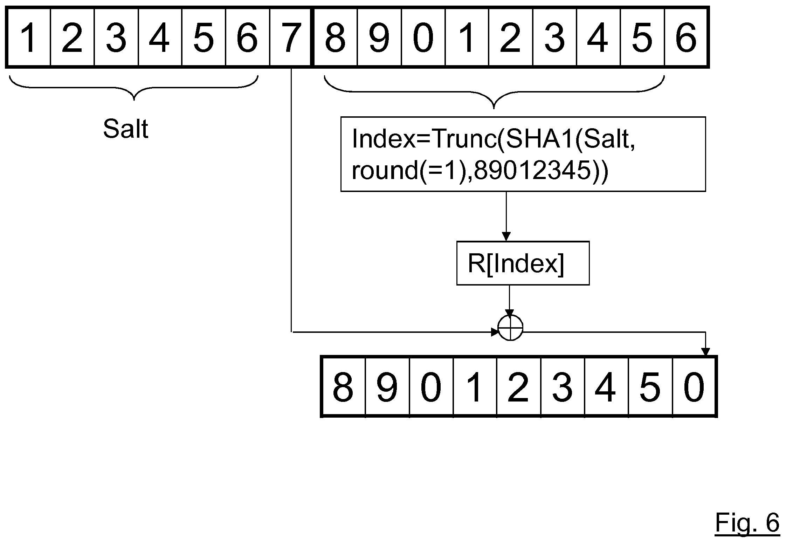

Figur 6 zeigt beispielhaft, wie mit der Anwendung einer Funktion auf denjenigen Teilstring des zu ersetzenden Strings (unabhängig von der Frage, ob man sich den Prozess der Tokenisierung oder der Wiederherstellung des ursprünglichen Datenstrings aus dem Token betrachtet), welcher mehr als ein Zeichen enthält, der Index eines Ersetzungszeichens aus der Ersetzungstabelle bestimmt werden kann.

In der dargestellten Ausführungsform wird eine Hash-Funktion auf einen String angewendet, der sich aus einem sogenannten salt, dem Rundenindex round, im vorliegenden Fall der Runde 1, und den Zeichen desjenigen Teilstrings, der mehr als ein Zeichen enthält, zusammensetzt. Im gewählten Beispiel ist die Hash-Funktion der SHA-1-Algorithmus. Der so erzeugte Hash-Wert wird auf die x signifikantesten Bits trunkiert, wobei x die Anzahl von Bits bezeichnet, die notwendig ist, um alle Einträge der Ersetzungstabelle zu indizieren. So wird vermieden, dass mit der Hash-Funktion Indices berechnet werden, die es in der tatsächlich gespeicherten Ersetzungstabelle nicht gibt. Bei einer Trunkierung auf x Bits kann die Tabelle 2^{x} Einträge aufweisen, die alle mit einem eindeutigen Index versehen werden können.

Mit dem so berechneten Index wird dann dasjenige Zeichen bestimmt, welches im gezeigten Beispiel das einzige Zeichen des ersten Teilstrings ersetzt.

Um eine mathematische Handhabbarkeit des hier beschriebenen Verfahrens zu gewährleisten, wird in Ausführungsformen zunächst der unverschlüsselte Datenstring 20 in eine interne Darstellung der Tokenisierungsengine umgesetzt. Wenn p[0] ... *p*[*n-1*] die einzelnen Zeichen des unverschlüsselten Datenstrings mit ihrer Position innerhalb des Strings bezeichnen, so ist die interne Darstellung dieses Strings *pᵢₙₜ*[0] ... *pᵢₙₜ*[*n*-1], wobei *pᵢₙₜ*[0] die ganzzahlige Position des Zeichens *p*[0] innerhalb des Alphabets *A*, aus welchem der unverschlüsselte Datenstring aufgebaut ist, bezeichnet, usw.

In diesem Fall müssten die folgenden Schritte r-mal wiederholt werden, wobei *i* die Zahl der aktuellen Runde beschreibt (beginnend mit 1):
1. Berechne den Hash-Wert *h* mit dem SHA-1-Hash-Algorithmus, welcher als Eingabe einen Binärstring verwendet, der aus der Verknüpfung des salt, der Zahl der Runde *i* und dem String *pᵢₙₜ*[1] ... *pint*[*n-1*] gebildet ist.
2. Nehme *k* als die signifikantesten 24 Bits von *h*.
3. Definiere *temp* als (*pᵢₙₜ*[0] + *R*[*k*]) mod a, wobei R[k] der Eintrag der Ersetzungstabelle *R* mit dem Index *k* und a die Größe der Alphabete der unverschlüsselten Datenstrings und der Token ist.
4. Bilde *pᵢₙₜ*[*j*]=*pᵢₙₜ*[*j*+*1*] für 0 ≤ *j* ≤ *n-2* und *pᵢₙₜ*[*n*-1]*=temp.*
5. Erhöhe *i* um 1.

Nach dem r-maligen Wiederholen der Schritte 1 bis 5 wird der String *t*[0] ... *t*[n-1] als die externe Darstellung von pᵢₙₜ[0] ... pint[*n*-1] ausgegeben, wobei *t*[0] = *A[pᵢₙₜ*[0]] ist, usw.

Das umgekehrte Verfahren, das den ursprünglichen unverschlüsselten Datenstring 20 aus dem Token 23 erzeugt, arbeitet dann wie folgt:
Anwenden der nachfolgend dargestellten Schritte *r*-mal auf die interne Darstellung *tᵢₙₜ*[0] ... *tᵢₙₜ*[*n*-1] des Token *t*[0] ... *t*[*n-1*]*,* wobei *i* die Anzahl der derzeitigen Runde (beginnend von *r*) bezeichnet:
1. Berechne den Hash-Wert *h* mit dem SHA-1-Hash-Algorithmus, welcher als Eingabe einen Binärstring verwendet, der aus der Verknüpfung des salt, der Zahl der Runde *i* und dem String t*ᵢₙₜ*[1] ... *tᵢₙₜ*[*n*-1] gebildet ist.
2. Man nehme *k* als die signifikantesten 24 Bits von *h*.
3. Definiere *temp* als *tᵢₙₜ*[*n*-1] - R[*k*], wobei R[*k*] der Eintrag der Ersetzungstabelle *R* mit dem Index *k* ist.
4. Falls *temp>*0 dann bilde *temp* = *temp* + *a*, wobei a die Größe der Alphabete der unverschlüsselten Datenstrings und der Token ist.
5. Bilde *tᵢₙₜ*[*j*]=*pᵢₙₜ*[*j-1*] für 1 ≤ *j* ≤ *n-1* und *tᵢₙₜ*[0]=*temp.*
6. Erhöhe *i* um 1.

Nach *r*-maligem Wiederholen der Schritte 1. bis 6. wird der String *p*[0] ... *p*[*n-1*] als die externe Darstellung von *tᵢₙₜ*[0] ... *tᵢₙₜ*[*n*-1] ausgegeben, wobei *p*[0] = *A*[*tᵢₙₜ*[0]] ist, usw.

Die in diesem Beispiel benutzte Operation zum Berechnen des neuen Zeichens in den Schritten 3. aus dem zu ersetzenden Zeichen und den Ersetzungszeichen aus der Ersetzungstabelle vermeidet die Notwendigkeit, beim Erzeugen der Token in die Ersetzungstabelle die ersetzten Zeichen hineinzuschreiben, was wiederum die Sicherheit erhöht, da an keiner Stelle, d.h. auch nicht im Token-Tresor eine Zuordnung zwischen den Zeichen des ursprünglichen Datenstrings und den Zeichen des Token möglich ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Knoten
- 2: Cluster
- 3: Verwaltungseinrichtung
- 4: Administrator
- 5, 6, 8: Netzwerkverbindung
- 7: Anwendung
- 9: Überwachungseinrichtung
- 10: Tokenisierungseinrichtung
- 12: Abfangeinrichtung
- 20: unverschlüsselter Datenstring
- 21: erster Teilstring
- 22: zweiter Teilstring
- 23: Token
- 24: String als Zwischenstufe
- 23: Token
- 24: zweiter Teilstring
- 25: erster Teilstring
- 26: String als Zwischenstufe
- 101: Kassensystem
- 102: Netzwerkverbindung
- 103: Server
- 104: Kreditkartenanbieter
- 105: Zahlungsausgleichssystem
- 106: Transaktionsdatenspeicher
- 107: Eingangspfad
- 109: Ausgangsdatenpfad
- 110: zentrale Verarbeitungseinheit des Servers
- 111: Internetverbindung

## Patentansprüche

1. Computerimplementiertes Verfahren zum Ersetzen eines Datenstrings durch einen Platzhalter in einer Ersetzungseinrichtung (10), wobei
die Ersetzungseinrichtung (10) eine Mehrzahl von das Ersetzen ausführenden Knoten (1) eines verteilten Systems (2) umfasst,
mit den Schritten
Empfangen des Datenstrings von einer Anwendung (106, 110),
Auswählen mindestens eines das Ersetzen ausführenden Knoten (1) aus der Mehrzahl von Knoten (1) des verteilten Systems,
Weiterleiten des Datenstrings an den mindestens einen ausgewählten Knoten (1), Erzeugen eines den Datenstring ersetzenden Platzhalter in dem mindestens einen ausgewählten Knoten (1) und
Übergeben des Platzhalters an die Anwendung (106, 110),
**dadurch gekennzeichnet,**
**dass** eine mit den Knoten (1) verbundene Verwaltungseinrichtung (3) alle zur Initialisierung der Knoten (1) notwendigen Konfigurationsdaten der Knoten (1) speichert,
**dass** mindestens ein Knoten (1) zentral mit den von der Verwaltungseinrichtung (3) zur Verfügung gestellten Konfigurationsdaten initialisiert wird,
**dass** die Knoten (1) die Konfigurationsdaten nicht permanent speichern, so dass bei einem Herunterfahren oder bei einem Ausfall eines Knoten (1) alle zuvor auf dem Knoten (1) vorhandenen Konfigurationsdaten gelöscht werden,
**dass** zumindest in einem Zustand, in dem zumindest ein Knoten (1) nicht initialisiert ist und zumindest ein Knoten (1) initialisiert ist, der zumindest eine initialisierte Knoten (1) den zumindest einen nicht initialisierten Knoten (1) bei einem Hochfahren initialisiert, so dass die Verwaltungseinrichtung (3) abgeschaltet werden kann oder die Verbindung (5) zwischen der Verwaltungseinrichtung (3) und den Knoten (1) unterbrochen werden kann, oder die Verwaltungseinrichtung (3) die Konfigurationsdaten für die Knoten (1) mindestens einer Überwachungseinrichtung (9) zur Verfügung stellt, die die nicht initialisierten Knoten (1) bei einem Hochfahren initialisiert, so dass die Verwaltungseinrichtung (3) abgeschaltet werden kann oder die Verbindung (5) zwischen der Verwaltungseinrichtung (3) und den Knoten (1) unterbrochen werden kann, und
**dass** die Knoten (1) und die Verwaltungseinrichtung (3) räumlich getrennt sind, wobei die Knoten (1) in der Cloud eines Serviceanbieters angeordnet sind, während die Konfigurationsdaten ausschließlich in der Verwaltungseinrichtung (3) des die Anwendung betreibenden Unternehmens gespeichert sind.

2. Computerimplementiertes Verfahren nach dem vorhergehenden Anspruch zum Wiederherstellen des Datenstrings aus dem Platzhalter in der Ersetzungseinrichtung (10) weiterhin mit den Schritten
Empfangen des Platzhalters von der Anwendung (106, 110),
Auswählen mindestens eines das Wiederherstellen ausführenden Knoten (1) aus der Mehrzahl von Knoten (1) des verteilten Systems (2),
Weiterleiten des Platzhalters an den mindestens einen ausgewählten Knoten (1), Erzeugen des wiederherzustellenden Datenstrings für den Platzhalter in dem mindestens einen ausgewählten Knoten (1) und
Übergeben des Datenstrings an die Anwendung (106, 110).

3. Computerimplementiertes Verfahren nach einem der vorhergehenden Ansprüche, **dadurch gekennzeichnet, dass** die Knoten (1) virtuelle Datenverarbeitungseinrichtungen sind, die nicht auf persistenten Speicher zugreifen.

4. Computerimplementiertes Verfahren nach einem der vorhergehenden Ansprüche, **dadurch gekennzeichnet, dass** zumindest die Knoten (1) oder die Verwaltungseinrichtung (3) auf einer ausschließlich für diesen Zweck ausgestalteten Hardware ausgeführt werden.

5. Computerimplementiertes Verfahren nach einem der vorhergehenden Ansprüche, **dadurch gekennzeichnet, dass** die Anwendung (106, 110) über eine Vermittlungseinrichtung mit Knoten verbunden ist, wobei die Vermittlungseinrichtung einen oder mehrere Netzwerkverbindung zu einem oder mehreren Knoten verwaltet.

6. Computerimplementiertes Verfahren nach einem der vorhergehenden Ansprüche, **dadurch gekennzeichnet, dass** mehrere Ersetzungen für eine Anwendung (110, 106) gleichzeitig auf mehreren Knoten (1) ausgeführt werden.

7. Computerimplementiertes Verfahren nach einem der vorhergehenden Ansprüche, **dadurch gekennzeichnet, dass** bei einem Ausfall eines Knoten (1) automatisch die Ersetzung auf einem oder mehreren der verbleibenden Knoten (1) ausgeführt wird.

8. Computerimplementiertes Verfahren nach einem der vorhergehenden Ansprüche, **dadurch gekennzeichnet, dass** als Platzhalter ein Token erzeugt wird, wobei das Erzeugen des den Datenstring ersetzenden Token die Schritte umfasst
Bereitstellen einer Ersetzungstabelle mit zufälligen Einträgen, wobei jedem Eintrag ein Index der Ersetzungstabelle zugeordnet ist,
Aufteilen des unverschlüsselten Datenstrings in zwei Teilstrings, wobei der erste Teilstring (25) aus einem Zeichen des unverschlüsselten Datenstrings besteht und der zweite Teilstring (24) aus den restlichen Zeichen des unverschlüsselten Datenstrings besteht,
Berechnen eines Index der Ersetzungstabelle aus dem zweiten Teilstring (24), so dass ein Eintrag der Ersetzungstabelle bestimmt wird,
Erzeugen eines Ersetzungszeichens aus dem von dem Index bestimmten Eintrag, Ersetzen der Zeichen des ersten Teilstrings (25) durch das Ersetzungszeichen, Vertauschen des ersten (25) und des zweiten (24) Teilstrings, so dass das ersetzte Zeichen des ersten Teilstrings (25) das letzte Zeichen oder das erste Zeichen des zweiten Teilstrings (24) wird und das erste Zeichen oder das letzte Zeichen des zweiten Teilstrings (24) das Zeichen des ersten Teilstrings (25) wird, und Wiederholen der vorstehenden Schritte, sodass ein dem unverschlüsselten Datenstring zugeordneter Token (23) erzeugt wird, und
das Erzeugen des wiederherzustellenden Datenstrings aus dem Token die Schritte umfasst Bereitstellen der Ersetzungstabelle,
Aufteilen des Token (23) in zwei Teilstrings, wobei der erste Teilstring (25) aus allen Zeichen außer dem letzten Zeichen des Token (23) besteht und der zweite Teilstring (24) nur dem letzten Zeichen des Token (23) besteht,
Berechnen eines Index der Ersetzungstabelle aus dem ersten Teilstring (25), sodass ein bestimmter Eintrag der Ersetzungstabelle bestimmt wird,
Erzeugen eines Ersetzungszeichens aus dem von dem Index bestimmten Eintrag der Ersetzungstabelle, so dass das Zeichen des zweiten Teilstrings (24) durch das Ersetzungszeichen ersetzt wird,
Vertauschen des ersten (25) und des zweiten (24) Teilstrings, so dass das Zeichen des zweiten Teilstrings (24) das erste Zeichen oder das letzte Zeichen des ersten Teilstrings (25) wird und das letzte Zeichen oder das erste Zeichen des ersten Teilstrings (25) das Zeichen des zweiten Teilstrings (24) wird, und
Wiederholen der vorstehenden Schritte, sodass der dem Token (23) zugeordnete unverschlüsselten Datenstring wiederhergestellt wird.

9. Computerimplementiertes Verfahren nach einem der vorhergehenden Ansprüche, **dadurch gekennzeichnet, dass** die Anwendung (106, 110) zusammen mit dem Datenstring einen den Datenstring eindeutig individualisierenden Zusatzwert an den mindestens einen Knoten (1) übermittelt, wobei für die Wiederherstellung des Datenstrings aus dem Platzhalter der selbe Zusatzwert zusammen mit dem Platzhalter von der Anwendung an den mindestens einen Knoten (1) übermittelt wird.

10. Computerimplementiertes Verfahren nach einem der vorhergehenden Ansprüche, **dadurch gekennzeichnet, dass** mindestens eine Komponente der Ersetzungseinrichtung in einer Cloud-Umgebung ausgeführt wird.

11. Computerimplementiertes Verfahren nach einem der vorhergehenden Ansprüche, **dadurch gekennzeichnet, dass** eine Abfangeinrichtung (12) auf einem Datenkanal (107, 109) vorgesehen ist, welche für einen in einer ersten Richtung übertragenen Datensatz die Schritte ausführt
a. Abfangen des über den Datenkanal (107) in der ersten Richtung übertragenen Datensatzes,
b. Identifizieren des zu ersetzenden Datenstrings in dem abgefangenen Datensatz,
c. Weiterleiten des zu ersetzenden Datenstrings an mindestens einen der Knoten (1) der Ersetzungseinrichtung (10) zum Bestimmen eines den Datenstring ersetzenden Platzhalters,
d. Empfangen des den Datenstring ersetzenden Platzhalters von dem mindestens einen Knoten (1),
e. Austauschen des Datenstrings in dem Datensatz durch den Platzhalter,
f. Weiterleiten des Datensatzes mit dem Platzhalter in der ersten Richtung über den Datenkanal (107), und
wobei die Abfangeinrichtung (12) für einen in einer zweiten Richtung übertragenen Datensatz die Schritte ausführt
g. Abfangen des über den Datenkanal (10) in der zweiten Richtung übertragenen Datensatzes,
h. Identifizieren eines Platzhalters in dem abgefangenen Datensatz,
i. Weiterleiten des Platzhalters an mindestens einen der Knoten (1) der Ersetzungseinrichtung (10) zum Wiederherstellen des durch den Platzhalter ersetzten Datenstrings,
j. Empfangen des durch den Platzhaltern ersetzten Datenstrings von dem mindestens einen Knoten (1) der Ersetzungseinrichtung (10),
k. Austauschen des Platzhalters in dem Datensatz durch den Datenstring und
I. Weiterleiten des Datensatzes mit dem Datenstring über den Datenkanal (109).

12. Computerprogramm, umfassend Befehle, die bei der Ausführung des Programms durch einen Computer diesen veranlassen, ein Verfahren nach einem der vorhergehenden Ansprüche auszuführen.

13. Maschinenlesbarer Datenträger mit einem darauf gespeicherten Computerprogramm nach Anspruch 12.

14. Datenverarbeitungsvorrichtung umfassend Mittel zur Ausführung eines Verfahrens nach einem der vorhergehenden Ansprüche.

## Claims

1. A computer-implemented method for replacing a data string by a placeholder in a replacement device (10), wherein
the replacement device (10) comprises a plurality of nodes (1) of a distributed system (2) carrying out the replacement,
with the steps reception of the data string from an application (106, 110),
selection of at least one node (1) carrying out the replacement from the plurality of nodes (1) of the distributed system,
onward transmission of the data string to the at least one selected node (1), generation of a placeholder replacing the data string in the at least one selected node (1) and
passing the placeholder to the application (106, 110),
**characterised in that**
a management device (3) connected to the nodes (1) stores all the configuration data of the nodes (1) necessary for the initialization of the nodes (1),
at least one node (1) is initialized centrally with the configuration data provided by the management device (3),
the nodes (1) do not permanently store the configuration data so that all the configuration data previously present on the node (1) are deleted in the case of a shutdown or a failure of a node (1),
in a state in which at least one node (1) is not initialized and at least one node (1) is initialized, the at least one initialized node (1) initializes the at least one non-initialized node (1) when booting up, with the result that the management device (3) can be switched off or the connection (5) between the management device (3) and the nodes (1) can be interrupted, or
the management device (3) provides the configuration data for the nodes (1) to at least one monitoring device (9), which initializes the non-initialized nodes (1) when booting up, with the result that the management device (3) can be switched off, or the connection (5) between the management device (3) and the nodes (1) can be interrupted, and
**in that** the nodes (1) and the management device (3) are arranged separately from each other, wherein the nodes (1) are arranged in the cloud of a service provide, while the configuration data are exclusively stored in the management device (3) of the company running the application.

2. The computer-implemented method according to the preceding claim for reconstituting the data string from the placeholder in the replacement device (10), furthermore with the steps
reception of the placeholder from the application (106, 110),
selection of at least one node (1) carrying out the reconstitution from the plurality of nodes (1) of the distributed system (2),
onward transmission of the placeholder to the at least one selected node (1), generation of the data string to be reconstituted for the placeholder in the at least one selected node (1) and
passing the data string to the application (106, 110).

3. The computer-implemented method according to one of the preceding claims, **characterized in that** the nodes (1) are virtual data processing devices which do not access persistent memories.

4. The computer-implemented method according to one of the preceding claims, **characterized in that** at least the nodes (1) or the management device (3) are executed on hardware designed exclusively for this purpose.

5. The computer-implemented method according to one of the preceding claims, **characterized in that** the application (106, 110) is connected to nodes via a switching device, wherein the switching device manages one or more network connections to one or more nodes.

6. The computer-implemented method according to one of the preceding claims, **characterized in that** several replacements are carried out for one application (110, 106) at the same time on several nodes (1).

7. The computer-implemented method according to one of the preceding claims, **characterized in that**, in the case of the failure of one node (1), the replacement is automatically carried out on one or more of the remaining nodes (1).

8. The computer-implemented method according to one of the preceding claims, **characterized in that** a token is generated as placeholder, wherein the generation of the token replacing the data string comprises the steps
provision of a replacement table with random entries, wherein each entry is assigned an index of the replacement table,
division of the unencrypted data string into two part strings, wherein the first part string (25) consists of one character of the unencrypted data string and the second part string (24) consists of the remaining characters of the unencrypted data string,
calculation of an index of the replacement table from the second part string (24) so that an entry of the replacement table is determined,
generation of a replacement character from the entry determined by the index, replacement of the characters of the first part string (25) by the replacement character,
interchanging the first (25) and the second (24) part strings so that the replaced character of the first part string (25) becomes the last character or the first character of the second part string (24) and the first character or the last character of the second part string (24) becomes the character of the first part string (25), and
repetition of the preceding steps so that a token (23) assigned to the unencrypted data string is generated, and
the generation of the data string to be reconstituted from the token comprises the steps provision of the replacement table,
division of the token (23) into two part strings, wherein the first part string (25) consists of all the characters except the last character of the token (23) and the second part string (24) consists solely of the last character of the token (23), calculation of an index of the replacement table from the first part string (25) so that a particular entry of the replacement table is determined,
generation of a replacement character from the entry of the replacement table determined by the index so that the character of the second part string (24) is replaced by the replacement character,
interchanging the first (25) and the second (24) part strings so that the character of the second part string (24) becomes the first character or the last character of the first part string (25) and the last character or the first character of the first part string (25) becomes the character of the second part string (24), and
repetition of the preceding steps so that the unencrypted data string assigned to the token (23) is reconstituted.

9. The computer-implemented method according to one of the preceding claims, **characterized in that** the application (106, 110) transmits, together with the data string, an additional value uniquely individualized to the data string to the at least one node (1), wherein, for the reconstitution of the data string from the placeholder, the same additional value is transmitted by the application together with the placeholder to the at least one node (1).

10. The computer-implemented method according to one of the preceding claims, **characterized in that** at least one component of the replacement device is executed in a cloud environment.

11. The computer-implemented method according to one of the preceding claims, **characterized in that** an intercept device (12) is provided on a data channel (107, 109), which, for a data record conveyed in a first direction, carries out the steps
a. Interception of the data record conveyed over the data channel (107) in the first direction,
b. Identification of the data string to be replaced in the intercepted data record,
c. Onward transmission of the data string to be replaced to at least one of the nodes (1) of the replacement device (10) for determination of a placeholder replacing the data string,
d. Reception of the placeholder replacing the data string by the at least one node (1),
e. Exchanging the data string in the data record for the placeholder,
f. Onward transmission of the data record with the placeholder over the data channel (107) in the first direction, and
wherein, for a data record conveyed in a second direction, the intercept device (12) carries out the steps
g. interception of the data record conveyed over the data channel (10) in the second direction,
h. Identification of a placeholder in the intercepted data record,
i. Onward transmission of the placeholder to at least one of the nodes (1) of the replacement device (10) for reconstitution of the data string replaced by the placeholder,
j. Reception of the data string replaced by the placeholder by the at least one node (1) of the replacement device (10),
k. Exchanging the placeholder in the data record for the data string and
I. Onward transmission of the data record with the data string over the data channel (109).

12. A computer program including commands which, when performing the program through a computer, cause the computer to perform a method according to one of the preceding claims.

13. A machine-readable data medium with a computer program according to claim 12 stored thereon.

14. A data processing device including means for performing a method according to one of the preceding claims.

## Revendications

1. Procédé mis en œuvre par ordinateur pour remplacer une chaîne de données par un substitut dans un dispositif de remplacement (10), dans lequel
le dispositif de remplacement (10) comprend une pluralité de nœuds (1) d'un système distribué (2) mettant en œuvre le remplacement,
le procédé comprenant les étapes consistant à
recevoir la chaîne de données en provenance d'une application (106, 110), sélectionner au moins un nœud (1) mettant en œuvre le remplacement parmi la pluralité de nœuds (1) du système distribué,
transmettre la chaîne de données vers le nœud (1) sélectionné, au moins au nombre de un,
générer un substitut remplaçant la chaîne de données dans le nœud (1) sélectionné, au moins au nombre de un, et
transférer le substitut à l'application (106, 110),
**caractérisé en ce que**
un dispositif de gestion (3) relié aux nœuds (1) stocke toutes les données de configuration des nœuds (1) qui sont nécessaires pour l'initialisation des nœuds (1),
au moins un nœud (1) est initialisé de manière centrale avec les données de configuration mises à disposition par le dispositif de gestion (3),
les nœuds (1) ne stockent pas de manière permanente les données de configuration, de sorte que toutes les données de configuration précédemment présentes sur le nœud (1) sont effacées en cas d'arrêt ou en cas de défaillance d'un nœud (1),
au moins dans un état dans lequel au moins un nœud (1) n'est pas initialisé et au moins un nœud (1) est initialisé, le nœud (1) initialisé, au moins au nombre de un, initialise le nœud non initialisé (1), au moins au nombre de un, au démarrage, de sorte que le dispositif de gestion (3) peut être désactivé ou la liaison (5) entre le dispositif de gestion (3) et les nœuds (1) peut être interrompue, ou le dispositif de gestion (3) met les données de configuration pour les nœuds (1) à disposition d'au moins un dispositif de surveillance (9) qui initialise au démarrage les nœuds (1) non initialisés, de sorte que le dispositif de gestion (3) peut être désactivé ou la liaison (5) entre le dispositif de gestion (3) et les nœuds (1) peut être interrompue, et les nœuds (1) et le dispositif de gestion (3) sont spatialement séparés, les nœuds (1) étant agencés dans le cloud d'un fournisseur de services, tandis que les données de configuration sont stockées exclusivement dans le dispositif de gestion (3) de l'entreprise utilisant l'application.

2. Procédé mis en œuvre par ordinateur selon la revendication précédente pour restaurer la chaîne de données à partir du substitut dans le dispositif de remplacement (10), comprenant en outre les étapes consistant à recevoir le substitut en provenance de l'application (106, 110),
sélectionner au moins un nœud (1) mettant en œuvre la restauration parmi la pluralité de nœuds (1) du système distribué (2),
transmettre le substitut vers le nœud (1) sélectionné, au moins au nombre de un,
générer la chaîne de données à restaurer pour le substitut dans le nœud (1) sélectionné, au moins au nombre de un, et
transférer la chaîne de données à l'application (106, 110).

3. Procédé mis en œuvre par ordinateur selon l'une des revendications précédentes, **caractérisé en ce que** les nœuds (1) sont des dispositifs de traitement de données virtuels qui n'ont pas accès à des mémoires persistantes.

4. Procédé mis en œuvre par ordinateur selon l'une des revendications précédentes, **caractérisé en ce qu'**au moins les nœuds (1) ou le dispositif de gestion (3) est/sont mis en œuvre sur un matériel physique conçu exclusivement à cet effet.

5. Procédé mis en œuvre par ordinateur selon l'une des revendications précédentes, **caractérisé en ce que** l'application (106, 110) est reliée à des nœuds par l'intermédiaire d'un commutateur, dans lequel le commutateur gère une ou plusieurs liaison(s) de réseau menant à un ou plusieurs nœud(s).

6. Procédé mis en œuvre par ordinateur selon l'une des revendications précédentes, **caractérisé en ce que** plusieurs remplacements pour une application (110, 106) sont mis en œuvre simultanément sur plusieurs nœuds (1).

7. Procédé mis en œuvre par ordinateur selon l'une des revendications précédentes, **caractérisé en ce que**, en cas de défaillance d'un nœud (1), le remplacement est mis en œuvre de manière automatique sur un ou plusieurs des nœuds (1) restants.

8. Procédé mis en œuvre par ordinateur selon l'une des revendications précédentes, **caractérisé en ce qu'**un jeton est généré en tant que substitut, l'étape de génération du jeton remplaçant la chaîne de données comprenant les étapes consistant à
fournir une table de remplacement comportant des entrées aléatoires, chaque entrée étant associée à un indice de la table de remplacement, diviser la chaîne de données non chiffrée en deux sous-chaînes, la première sous-chaîne (25) étant constituée d'un caractère de la chaîne de données non chiffrée et la seconde sous-chaîne (24) étant constituée des caractères restants de la chaîne de données non chiffrée,
calculer un indice de la table de remplacement à partir de la seconde sous-chaîne (24) de sorte qu'une entrée de la table de remplacement est déterminée,
générer un caractère de remplacement à partir de l'entrée déterminée par l'indice,
remplacer les caractères de la première sous-chaîne (25) par le caractère de remplacement,
permuter les première (25) et seconde (24) sous-chaînes de sorte que le caractère remplacé de la première sous-chaîne (25) devient le dernier caractère ou le premier caractère de la seconde sous-chaîne (24) et que le premier caractère ou le dernier caractère de la seconde sous-chaîne (24) devient le caractère de la première sous-chaîne (25), et
répéter les étapes précédentes, de sorte qu'un jeton (23) associé à la chaîne de données non chiffrée est généré, et
l'étape de génération de la chaîne de données à restaurer à partir du jeton comprend les étapes consistant à :
fournir la table de remplacement,
diviser le jeton (23) en deux sous-chaînes, la première sous-chaîne (25) étant constituée de tous les caractères à l'exception du dernier caractère du jeton (23) et la seconde sous-chaîne (24) étant constituée uniquement du dernier caractère du jeton (23),
calculer un indice de la table de remplacement à partir de la première sous-chaîne (25), de sorte qu'une entrée déterminée de la table de remplacement est déterminée,
générer un caractère de remplacement à partir de l'entrée, déterminée par l'indice, de la table de remplacement, de sorte que le caractère de la seconde sous-chaîne (24) est remplacé par le caractère de remplacement,
permuter les première (25) et seconde (24) sous-chaînes de sorte que le caractère de la seconde sous-chaîne (24) devient le premier caractère ou le dernier caractère de la première sous-chaîne (25) et que le dernier caractère ou le premier caractère de la première sous-chaîne (25) devient le caractère de la seconde sous-chaîne (24), et
répéter les étapes précédentes de sorte que la chaîne de données non chiffrée associée au jeton (23) est restaurée.

9. Procédé mis en œuvre par ordinateur selon l'une des revendications précédentes, **caractérisé en ce que** l'application (106, 110) transmet vers le nœud (1), au moins au nombre de un, conjointement à la chaîne de données, une valeur supplémentaire qui individualise de manière univoque la chaîne de données, suite à quoi la même valeur supplémentaire est transmise, conjointement au substitut, de l'application vers le nœud (1), au moins au nombre de un, afin de restaurer la chaîne de données à partir du substitut.

10. Procédé mis en œuvre par ordinateur selon l'une des revendications précédentes, **caractérisé en ce qu'**au moins une composante du dispositif de remplacement est mise en œuvre dans un environnement de cloud.

11. Procédé mis en œuvre par ordinateur selon l'une des revendications précédentes, **caractérisé en ce que** sur un canal de données (107, 109) est prévu un dispositif d'interception (12) qui, pour un jeu de données transmis dans une première direction, met en œuvre les étapes consistant à
a. intercepter le jeu de données transmis dans la première direction au travers du canal de données (107),
b. identifier la chaîne de données à remplacer dans le jeu de données intercepté,
c. transmettre la chaîne de données à remplacer vers au moins un des nœuds (1) du dispositif de remplacement (10) afin de déterminer un substitut remplaçant la chaîne de données,
d. recevoir le substitut remplaçant la chaîne de données en provenance du nœud (1), au moins au nombre de un,
e. échanger la chaîne de données contre le substitut dans le jeu de données,
f. transmettre le jeu de données avec le substitut dans la première direction au travers du canal de données (107), et
pour un jeu de données transmis dans une seconde direction, le dispositif d'interception (12) met en œuvre les étapes consistant à
g. intercepter le jeu de données transmis dans la seconde direction au travers du canal de données (10),
h. identifier un substitut dans le jeu de données intercepté,
i. transmettre le substitut vers au moins un des nœuds (1) du dispositif de remplacement (10) afin de restaurer la chaîne de données remplacée par le substitut,
j. recevoir la chaîne de données, remplacée par le substitut, en provenance du nœud (1), au moins au nombre de un, du dispositif de remplacement (10),
k. échanger le substitut contre la chaîne de données dans le jeu de données et
l. transmettre le jeu de données avec la chaîne de données au travers du canal de données (109).

12. Programme informatique, comprenant des instructions qui, lorsque le programme est mis en œuvre par un ordinateur, permettent à l'ordinateur de mettre en œuvre un procédé selon l'une des revendications précédentes.

13. Support de données pouvant être lu par une machine et sur lequel est stocké un programme informatique selon la revendication 12.

14. Appareil de traitement de données comprenant un moyen permettant la mise en œuvre d'un procédé selon l'une des revendications précédentes.
